# EUROPEAN PATENT SPECIFICATION

(11) **EP 2 779 375 B1**
(45) Date of publication and mention of the grant of the patent: **04.11.2015**
(21) Application number: 14159567.8
(22) Date of filing: 13.03.2014
(51) Int. Cl.: F03D 11/00, H02K 9/14

(54) **Fan shroud and motor assembly comprised thereof**
Lüfterhaube und Motoranordnung damit
Carénage de ventilateur et ensemble moteur constitué de celui-ci

(30) Priority: 15.03.2013 US 201313832616
(43) Date of publication of application: 17.09.2014
(73) Proprietor: General Electric Company, Schenectady, NY 12345 (US)
(72) Inventor: Stehulak, Gregory Michael, Fort Wayne, IN Indiana 46815 (US); Fried, Joshua Zachary, West Lafayette, IN Indiana 47906 (US)
(74) Representative: Serjeants LLP

(56) References cited:
- EP-A1- 0 753 928
- DE-U1-202013 004 746
- FR-A- 1 453 597
- US-A- 5 747 900

## Description

### BACKGROUND OF THE INVENTION

The subject matter disclosed herein relates to structures that dissipate thermal energy and, in particular, to embodiments of a fan shroud that disperse cooling fluid about a motor, e.g., for use to actuate the pitch of a turbine wind blade.

Motors that operate under prolonged conditions can generate excessive heat. The high temperatures that result from these conditions can reduce performance and shorten the overall lifespan of the motor. To avoid these problems, many motors incorporate one or more fans that move a cooling fluid (e.g., air) over the outer surface of the motor to draw off and disperse thermal energy. These fans may couple with a shroud, which helps direct a majority of the moving fluid towards the outer surface of the motor.

Designs that improve cooling efficiency and/or cooling rates often increase the amount of cooling fluid that comes in proximity to the outer surface of the motor. For example, some designs utilize additional fans to disperse more fluid into the shroud. Other designs may increase the size (e.g., flow rate) of the fan to meet cooling requirements and demands. When changes to the fan are not practical, however, new designs may introduce changes in the shroud to provide geometry that harnesses the cooling fluid in a manner that facilitates thermal dissipation. Unfortunately, although each of these design choices afford better thermal energy control, the improvements to enhance performance may add costs and complexity to the design that run contrary to product commercialization and budgetary constraints.

The discussion above is merely provided for general background information and is not intended to be used as an aid in determining the scope of the claimed subject matter.

FR 1453597 describes an electric machine with a cover mounted above the outer casing to form lateral air intake ports and an axial air channel.

### BRIEF DESCRIPTION OF THE INVENTION

This disclosure proposes designs for a fan shroud that dissipates thermal energy from a motor using a single fan design. Examples of the proposed fan shroud allow the cooling fluid to achieve maximum velocity at a position at which the fan shroud exposes the flow to cooler ambient air that surrounds the fan shroud/motor assembly. In this configuration, the high-velocity cooling fluid draws the cooler ambient air towards the surface of the motor, which, in turn, increases the thermal capacity of the moving cooling fluid to dissipate more thermal energy from the motor.

This disclosure also describes, in one embodiment, motor assembly comprising a motor with a motor housing and a central motor axis, a fan shroud coupled to the motor, and a fan disposed on the fan shroud. The fan shroud has side elements with ends that terminate at, respectively, a first plane and a second plane. The first plane and the second plane are perpendicular to, respectively, a first tangent plane and a second tangent plane that are tangent to an outer profile of the motor. The fan shroud has an aperture to allow cooling fluid to flow through the fan shroud.

Optional features of the motor assembly are set out in claims 2 to 6 below.

This brief description of the invention is intended only to provide a brief overview of the subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 depicts a perspective view of an exemplary embodiment of a fan shroud as part of a motor assembly;
FIG. 2 depicts a perspective view of an exemplary embodiment of a fan shroud;
FIG. 3 depicts a front view of the fan shroud of FIG. 2;
FIG. 4 depicts a front view of the fan shroud of FIG. 2 as part of a motor assembly;
FIG. 5 depicts a flow pattern of cooling fluid that can occur on the motor assembly of FIG. 4; and
FIG. 6 depicts an example of a material blank that can be used to form an exemplary embodiment of a fan shroud.

### DETAILED DESCRIPTION OF THE INVENTION

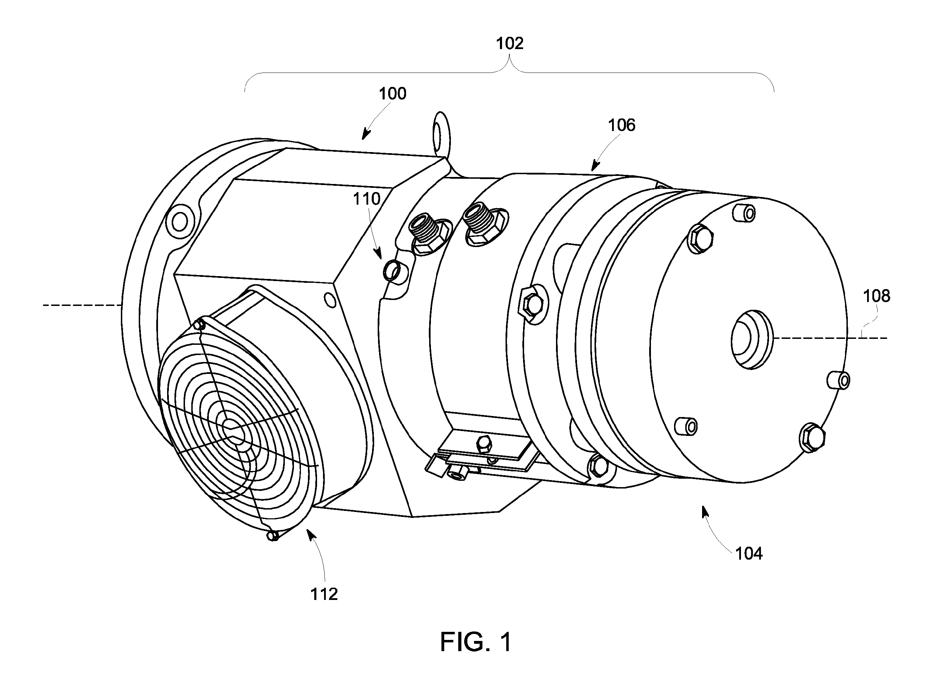

FIG. 1 illustrates an exemplary embodiment of a fan shroud 100 that can improve cooling efficiency to maintain the temperature of a motor. The fan shroud 100 is part of a motor assembly 102. Examples of the motor assembly 102 find use in a variety of applications, namely, to adjust the position of rotor blades found in wind turbine systems. In the example of FIG. 1, the motor assembly 102 has a motor 104 with a housing 106 and a central motor axis 108. One or more fasteners 110 couple the fan shroud 100 to the outer housing 106. This configuration mounts a fan 112, which can secure to the fan shroud 100, in position on the housing 106.

Implementation of the motor assembly 102 as part of a wind turbine system often requires the motor 104 to hold the rotor blades in one or more desired positions. To fulfill this requirement, the wind turbine system often maintains power on the motor 104 for extended periods of time. Energizing the motor 104 in this manner generates heat. Operation of the fan 106 dissipates the heat from the motor assembly 102 by flowing cooling fluid (e.g., air) into the fan shroud 100 and proximate the outer housing 106 of the motor 104.

As set forth more below, construction of the fan shroud 100 facilitates cooling by improving flow characteristics of the cooling fluid. Embodiments of the fan shroud 100 have features that allow the cooling fluid to achieve maximum velocity at locations along the housing 106 of the motor 104. These embodiments take advantage of the high velocity of the moving cooling fluid to draw additional, cooler fluid from the environment outside of the fan shroud 100 into the flowstreams that form about the housing 106. The addition of this cooler fluid expands the thermal capacity of the cooling fluid to increase the amount of heat that can dissipate from the motor 104, e.g., during extended operation of the motor assembly 102.

The fan shroud 100 can embody a unitary or monolithic structure, e.g., that is formed from sheet metal (e.g., steel, stainless steel, aluminum, etc.). The materials of construction may comprise thermally conductive materials that can further enhance thermal dissipation. In other examples, construction of the fan shroud 100 can incorporate a number of individual pieces that secure together using known fasteners (e.g., screws and bolts) and techniques (e.g., welds).

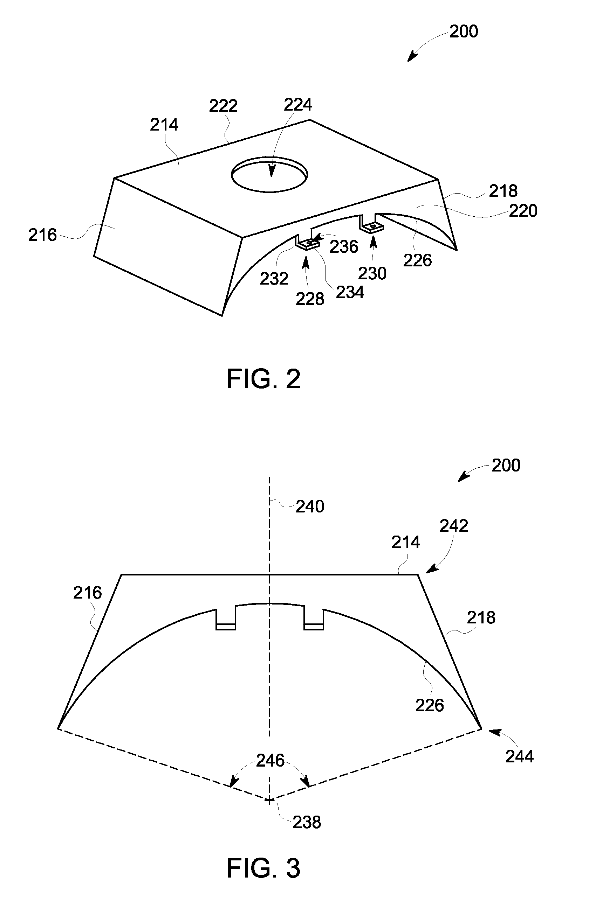

FIG. 2 illustrates another exemplary embodiment of a fan shroud 200 for use in a motor assembly (e.g., motor assembly 102 of FIG. 1). The fan shroud 200 has a top element 214 and a plurality of side elements (e.g., a first side element 216 and a second side element 218). The fan shroud 200 also has a front element 220 and a back element 222. As also shown in FIG. 2, the top element 214 has an aperture 224. The front element 220 and the back element 222 have an edge 226 that, in one configuration, has a contour that matches the contour and/or shape of the outer profile of the housing 206. Examples of outer profile can form a circular shape, e.g., wherein the motor 204 has a generally round and/or cylindrical configuration.

The fan shroud 200 also comprises one or more mounting features (e.g., a first mounting feature 228 and a second mounting feature 230) that secure to one or more of the front element 220 and the back element 222. In one embodiment, the mounting features 228, 230 are found on both the front element 220 and the back element 222. The mounting features 228, 230 can form an L-bracket with a first portion 232 that extends radially and a second portion 234 that extends axially, e.g., relative to the axis of the motor (e.g., central motor axis 108 of FIG. 1). The first portion 232 can secure with the fan shroud 200, e.g., to one of the front elements 220 and the back element 222. The second portion 234 can have an opening 236 that can receive a fastener (e.g., fasteners 110 of FIG. 1) to secure the fan shroud 200 in position on the motor housing (e.g., motor outer housing 106 of FIG. 1), as shown in the example of FIG. 1 above.

FIG. 3 illustrates a front view of the fan shroud 200 of FIG. 2. The fan shroud 200 has a shroud axis 238 and a centerline 240 that extends through the shroud axis 238. In one example, the shroud axis 238 forms a center point for the shape that defines the contour of the edge 226. The side elements 216, 218 secure to the top element 214 at a first end 242 and terminate at a second end 244. As shown in FIG. 3, the ends 244 of the first side element 216 and the second side element 218 subtend an angle 246 about the shroud axis 238.

In one embodiment, the fan shroud 200 is symmetric about the centerline 240, e.g., where the first side element 216 and the second side element 218 are positioned an equal distance with respect to the centerline 240. This configuration locates the second end 244 of the first side element 216 diametrically opposite of the second end 244 of the second side element 218. However, in other configurations, the fan shroud 200 can forgo such symmetry and still promote optimal flow dynamics of the cooling fluid to improve cooling efficiency, as discussed above. To this end, values for the angle 246 can vary, e.g., greater than and/or less than 90 ° and/or in a range of 100 ° to 180 °. This disclosure contemplates that the angle 246 includes reasonable manufacturing tolerances understood by artisans familiar with relevant techniques to manufacture embodiments of the fan shrouds described herein.

The side elements 216, 218 can take a variety of shapes. For example, the side elements 216, 218 can form a plane and/or a planar surface that extends from the first end 242 to the second end 244 and axially from the front element 114 to the back element 116. In other embodiments, the side elements 216, 218 can form a curvilinear surface, e.g., that curves inward and/or outward relative to the centerline 240 from the first end 242 to the second end 244. This curvature can form concave and/or convex features in the side elements 216, 218. Selection of the appropriate shape of the side elements 216, 218 can vary as necessary to tune the flow characteristics (e.g., velocity) of the air transiting out of the fan shroud 200, as disclosed herein.

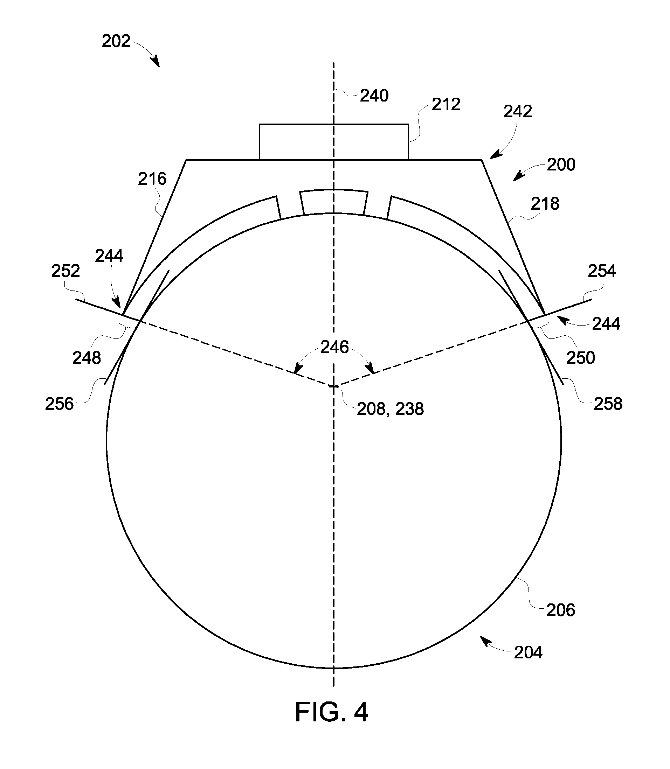

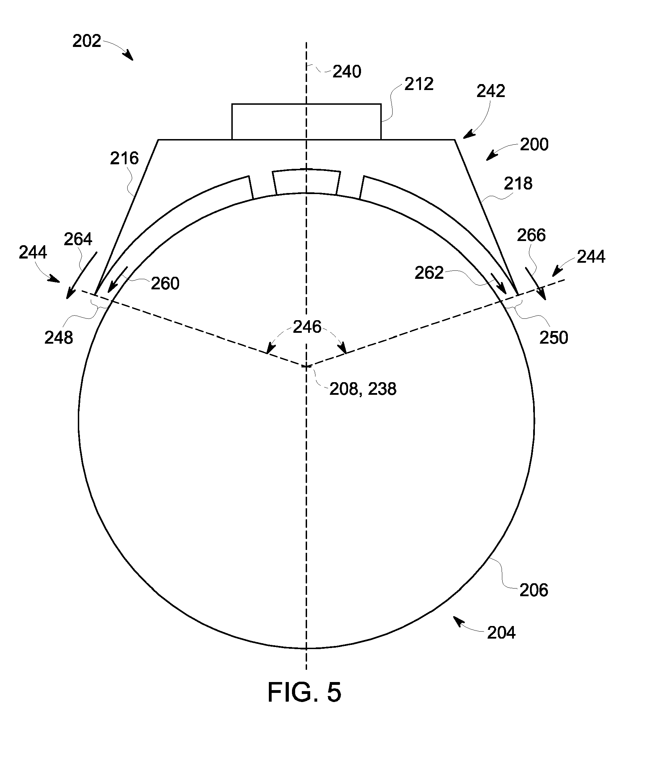

FIGS. 4 and 5 illustrate a front view of the fan shroud 200 as part of a motor assembly 202. In FIG. 4, the shroud axis 238 aligns with the central motor axis 208 of the motor 204. In this position, the first side element 216 and the second side element 218 form a gap (e.g., a first gap 248 and a second gap 250) at the second end 244. The gaps 248, 250 extend axially along the central axis 208 of the motor 204. In one example, the first gap 248 and the second gap 250 are the same, i.e., the first side element 216 and the second side element 218 are spaced apart from the housing 206 by the same distance.

FIG. 4 also shows that the second ends 244 of the first side element 216 and the second side element 218 terminate at a plane (e.g., a first plane 252 and a second plane 254). Examples of the planes 252, 254 are perpendicular to a tangent plane (e.g., a first tangent plane 256 and a second tangent plane 258). The tangent planes 256, 258 are tangent to the outer profile of the motor 204.

FIG. 5 illustrates one exemplary flow pattern that develops using embodiments of the fan shroud disclosed herein. The flow pattern includes a plurality of primary airstreams (e.g., a first primary airstream 260 and a second primary airstream 262). A plurality of peripheral airstreams (e.g. a first peripheral airstream 264 and a second peripheral airstream 266) can enter the primary airstreams 260, 262 near the second end 244 of the side elements 216, 218. These peripheral airstreams 264, 266 comprise cooler fluid found in the environment surrounding the fan shroud 200.

The configuration of the fan shroud 200 allows cooling fluid to exit the fan shroud 200 as the cooling fluid traverses the housing 206 of the motor 204. At the gaps 248, 250, the primary airstreams 260, 262 exit the fan shroud 200 at a maximum velocity and at a low pressure. These characteristics of the airstreams 260, 262 permits cooler fluid (e.g., peripheral airstreams 264, 266) from outside of the fan shroud 200 to mix with the cooling fluid to improve thermal dissipation during operation of the fan 212. This feature introduces additional cooling fluid in proximity of the surface of the motor 106 to achieve optimal heat transfer for a given flow rate and pressure drop without requiring additional fans or other air moving devices.

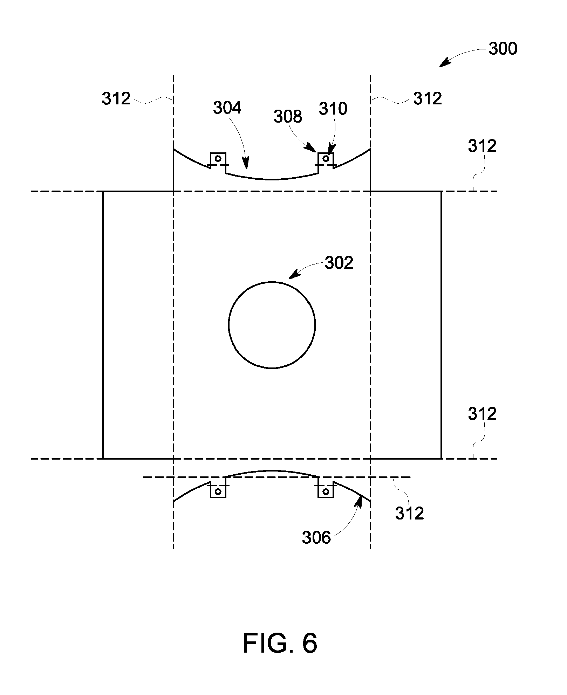

FIG. 6 illustrates an example of a material blank 300 that can be used to form the fan shrouds 100, 200 of FIGS. 1, 2, 3, 4, and 5. Examples of the material blank 300 can embody a square and/or generally rectangular piece of sheet metal have a material thickness of from about 0.5 mm to about 10 mm. As shown in FIG. 6, this material can be cut, e.g., laser cut, to form one or more of the features of the fan shrouds contemplated herein. For example, the laser cutting can create an opening 302, one or more radial surfaces (e.g., a first radial surface 304 and a second radial surface 306), and tabs 308 with penetrating apertures 310. In one embodiment, the material blank 300 can have a number of bend lines 312, about which the material of the material blank 300 is shaped and formed to form the general shape and characteristics of the fan shrouds discussed above.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

## Claims

1. A motor assembly (202), comprising:
a motor (204) with a motor housing (206) and a central motor axis (208);
a fan shroud (200) coupled to the motor (204); and
a fan (212) disposed on the fan shroud (200);
wherein the fan shroud (200) comprises side elements (216, 218) with ends that terminate at, respectively, a first plane (252) and a second plane (254), and wherein the first plane (252) and the second plane (254) are perpendicular to, respectively, a first tangent plane (256) and a second tangent plane (258) that are tangent to an outer profile of the motor (204); and
wherein the fan shroud (200) has an aperture (224) to allow cooling fluid to flow through the fan shroud (200).

2. A motor assembly (202) according to claim 1, wherein the side elements (216, 218) are spaced apart from the motor housing (206) at the ends to form a gap (248, 250) that allows cooling fluid to exit the cavity, and wherein the gap (248) at the end of the first side element (216) is optionally the same size as the gap (250) at the end of the second side element (218).

3. A motor assembly (202) according to claim 1 or claim 2, wherein the first side element (216) and the second side element (218) are symmetric with respect to a centerline (240) that extends through the central axis (208).

4. A motor assembly (202) according to any preceding claim, further comprising one or more L-brackets (228, 230) that are formed integrally with the fan shroud (200), wherein the L-brackets have an axial portion with an opening to receive a fastener that secures the fan shroud (200) to the housing (206).

5. A motor assembly (202) according to claim 1, wherein the fan shroud (200) further comprises a front element (220) and a back element (222) that couple with the side elements (216, 218).

6. A motor assembly (202) according to claim 1 or claim 5, wherein the side elements (216, 218) comprise a planar surface or a curvilinear surface that curves relative to a centerline.

## Patentansprüche

1. Motoranordnung (202) aufweisend:
einen Motor (204) mit einem Motorgehäuse (206) und einer zentralen Motorachse (208);
einem Lüfterkragen (200), der mit dem Motor (204) verbunden ist; und
einen Lüfter (212), der an dem Lüfterkragen (200) angeordnet ist;
wobei der Lüfterkragen (200) Seitenelemente (216, 218) mit Enden aufweist, die in einer ersten Ebene (252) bzw. einer zweiten Ebene (254) enden, und wobei die erste Ebene (252) und die zweite Ebene (254) rechtwinklig sind gegenüber einer ersten Tangentenebene (256) bzw. einer zweiten Tangentenebene (258), die Tangenten gegenüber einem Außenprofil des Motors (204) sind; und
wobei der Lüfterkragen (200) eine Öffnung (224) aufweist, um es einem Kühlfluid zu ermöglichen, durch den Lüfterkragen (200) zu strömen.

2. Motoranordnung (202) nach Anspruch 1, wobei die Seitenelemente (216, 218) an den Enden von dem Motorgehäuse (206) beabstandet sind, um einen Spalt (248, 250) zu bilden, der es dem Kühlfluid ermöglicht, den Hohlraum zu verlassen, und wobei der Spalt (248) an dem Ende des ersten Seitenelements (216) optional dieselbe Größe hat wie der Spalt (250) an dem Ende des zweiten Seitenelements (218).

3. Motoranordnung (202) nach Anspruch 1 oder nach Anspruch 2, wobei das erste Seitenelement (216) und das zweite Seitenelement (218) symmetrisch mit Bezug zu einer Mittellinie (240) sind, die sich durch die zentrale Achse (208) erstreckt.

4. Motoranordnung (202) nach irgendeinem vorhergehenden Anspruch, ferner aufweisend eine oder mehrere L-Bügel (228, 230), die integral mit dem Lüfterkragen (200) ausgebildet sind, wobei die L-Bügel einen Axialabschnitt mit einer Öffnung haben, um eine Befestigungseinrichtung aufzunehmen, das den Lüfterkragen (200) an dem Gehäuse (206) befestigt.

5. Motoranordnung (202) nach Anspruch 1, wobei der Lüfterkragen (200) ferner ein vorderes Element (220) und ein hinteres Element (222) aufweist, die mit den Seitenelementen (216, 218) verbunden sind.

6. Motoranordnung (202) nach Anspruch 1 oder nach Anspruch 5, wobei die Seitenelemente (216, 218) eine ebene Oberfläche oder eine gekrümmte Oberfläche, die sich gegenüber einer Mittellinie krümmt, aufweisen.

## Revendications

1. Ensemble de moteur (202) comprenant :
un moteur (204) ayant un boîtier de moteur (206) et un axe central de moteur (208) ;
un capot de ventilateur (200) accouplé au moteur (204) ; et
un ventilateur (212) placé sur le capot de ventilateur (200) ;
dans lequel le capot de ventilateur (200) comprend des éléments latéraux (216, 218) avec des extrémités qui se terminent respectivement au niveau d'un premier plan (252) et d'un deuxième plan (254), et dans lequel le premier plan (252) et le deuxième plan (254) sont perpendiculaires respectivement à un premier plan tangent (256) et à un deuxième plan tangent (258) qui sont tangents à un profil extérieur du moteur (204) ; et
dans lequel le capot de ventilateur (200) comporte une ouverture (224) pour permettre à un fluide de refroidissement de circuler à travers le capot de ventilateur (200).

2. Ensemble de moteur (202) selon la revendication 1, dans lequel les éléments latéraux (216, 218) sont distants du boîtier de moteur (206) aux extrémités pour former un espace (248, 250) qui permet à un fluide de refroidissement de sortir de la cavité, et dans lequel l'espace (248) situé à l'extrémité du premier élément latéral (216) a éventuellement la même taille que l'espace (250) situé à l'extrémité du deuxième élément latéral (218).

3. Ensemble de moteur (202) selon la revendication 1 ou 2, dans lequel le premier élément latéral (216) et le deuxième élément latéral (218) sont symétriques par rapport à une ligne médiane (240) qui passe par l'axe central (208).

4. Ensemble de moteur (202) selon l'une quelconque des revendications précédentes, comprenant en outre un ou plusieurs supports en L (228, 230) qui sont formés d'un seul tenant avec le capot de ventilateur (200), dans lequel les supports en L ont une partie axiale comportant une ouverture destinée à recevoir un élément de fixation qui fixe le capot de ventilateur (200) sur le boîtier (206).

5. Ensemble de moteur (202) selon la revendication 1, dans lequel le capot de ventilateur (200) comprend en outre un élément avant (220) et un élément arrière (222) qui s'accouplent aux éléments latéraux (216, 218).

6. Ensemble de moteur (202) selon la revendication 1 ou 5, dans lequel les éléments latéraux (216, 218) comprennent une surface plane ou une surface curvilinéaire qui s'incurve par rapport à une ligne médiane.
